# EUROPÄISCHE PATENTSCHRIFT

(11) **EP 2 067 423 B1**
(45) Veröffentlichungstag und Bekanntmachung des Hinweises auf die Patenterteilung: **11.01.2017**
(21) Anmeldenummer: 08105737.4
(22) Anmeldetag: 05.11.2008
(51) Int. Cl.: A47J 31/46

(54) **Getränkemaschine mit einem Mehrfunktionenventil**
Drinks machine with a multifunctional valve
Machine à boissons dotée d'un clapet multifonction

(30) Priorität: 05.12.2007 DE 102007058375
(43) Veröffentlichungstag der Anmeldung: 10.06.2009
(73) Patentinhaber: BSH Hausgeräte GmbH, 81739 München (DE)
(72) Erfinder: Daburger, Josef, 83313 Siegsdorf / Hammer (DE); Gius, Josef, 83374 Traunwalchen (DE); Stadler, Stefan, 83376 Truchtlaching (DE)

(56) Entgegenhaltungen:
- WO-A1-2007/014891
- DE-A1- 3 741 922
- DE-U1- 20 217 068
- US-A- 3 374 805

## Beschreibung

Die Erfindung betrifft eine Getränkemaschine mit einem Wassertank, einer Heizeinrichtung, insbesondere einem massearmen Durchlauferhitzer, und einer Brühkammer, die durch jeweils dazwischen angeordnete Leitungsabschnitte miteinander verbunden sind. Stromauf der Brühkammer umfasst sie zumindest ein druckabhängig selbsttätig schaltendes Ventil, das als Überdruckventil insbesondere stromauf der Heizung und/oder als Unterdruckventil an einer beliebigen Stelle im Leitungsbereich stromauf der Brühkammer ausgebildet sein kann. Die Erfindung betrifft außerdem ein Mehrfunktionenventil und die Verwendung eines druckabhängig selbsttätig schaltenden Ventils als druckunabhängig betätigbares Ventil zum Überdruckabbau.

Aus US 3 374 805 A ist ein Überdruckventil bekannt, das automatisch, oder per Betätigung von Hand zum Abbau eines Überdrucks in einem Behälter geeignet ist. Ein ähnliches Überdruckventil in der Wasser-Ablassleitung eines Getränkewärmers, das zusätzlich per Hand als Ablassventil für Flüssigkeiten betätig werden kann, ist z.B. aus der DE 37 41 992 A1 bekannt.

Dazu ist aus WO-A-2007/014891 der Fluidplan eines Getränkebereiters mit einer Pumpe, einem zwischen der Pumpe und einem Flüssigkeitserhitzer angeordnetem Vibrationsdämpfungsventil, und einer zwischen dem Flüssigkeitserhitzer und verschiedenen Flüssigkeitsabgabeeinrichtungen angeordneten Ventilträgereinheit bekannt. An dieser Ventilträgereinheit sind dabei unterschiedliche Ventile in einem Gehäuse angeordnet, die verschiedene Funktionen übernehmen. So ist an der Ventilträgereinheit ein Überdruckventil angeordnet, welches zusätzlich mittels eines Elektromagnets geöffnet werden kann, um eventuellen Überdruck in Richtung eines Entspannungsbehälters abzubauen. Zusätzlich sind in dem Gehäuse weitere Ventile angeordnet, die bei verschiedenen Systemdrücken öffnen, so wie ein Ventil zum steuern des Getränkeflusses zu einer Verteilereinrichtung.

Die DE 66 07 409 U1 beschreibt ein Unterdruckventil in einer Kaffeemaschine unter anderem zwischen einer Heizeinrichtung und einem Aufgusstrichter. Prinzipiell dem gleichen Zweck dienen Unterdruckventile in Kaffeepadmaschinen oder Mehrgetränkemaschinen. Darin können Getränke zubereitet werden, die durch Verdünnung oder Eluation von in Kapseln oder Pads enthaltenen Konzentraten mit heißem Wasser entstehen. Gegen ein Nachtropfen der benutzten Kapseln oder Pads beim Entnehmen und um Konzentrat zu sparen, sollen die Kapseln vollständig geleert und die Pads nicht mehr tropfnass sein. Dazu kann ein Dampfstoß dienen, der zumindest bei Verwendung eines massearmen Durchlauferhitzers oder eines Thermoblocks als Heizeinrichtung durch ein frühzeitiges Abschalten der Wasserpumpe und ein quasi schlagartiges Verdampfen des Restwassers in der Heizung erzeugt wird. Das Leitungssystem stromab der Heizung ist bei Beendigung des Zubereitungsvorgangs folglich mit Dampf gefüllt. Sinkt später die Temperatur im System unter den Siedepunkt des Wassers ab, kondensiert der Dampf in den Leitungen und sein Volumen verkleinert sich. Dadurch entsteht Unterdruck. Um einen Druckausgleich durch Ansaugen von Luft und Mitreißen von Flüssigkeitsresten aus der Brühkammer zu vermeiden, befindet sich stromauf der Brühkammer ein Rückschlagventil. Ein Druckausgleich aus der Richtung der Brühkammer ist damit verhindert, nicht aber aus der Gegenrichtung. Der Unterdruck kann dort bewirken, dass Wasser aus dem Tank durch die Pumpe hindurch bis in die Heizung und in den Leitungsabschnitt stromab der Heizeinrichtung angesaugt wird. Dasjenige Wasser aus dem Wassertank, das auf diese Weise in den Leitungsabschnitt stromab der Heizung gelangt, kann bei einem nachfolgenden Getränkezubereitungsvorgang nicht mehr erhitzt werden. Es führt zu einer verminderten Getränketemperatur und -qualität. Daher wird auch bei modernen Heißgetränkemaschinen stromauf der Brühkammer das eingangs erwähnte Unterdruckventil angeordnet, das im Unterdruckfall eine Verbindung zur Atmosphäre schafft. Bei Betriebsdruck dagegen schließt dieses Ventil sicher.

Aus Sicherheitsgründen werden andererseits Maßnahmen gegen Überdruck ergriffen. So ist aus der DE 10 2004 046 436 A1 ein Überdruckventil stromauf der Heizung bekannt. Die DE10 2004 004 833 A1 offenbart einen Sicherheitsschalter an der Brühkammer, der einen Betrieb der Getränkemaschine bei geöffneter Brühkammer durch Abschalten der Heizung und/oder Fördereinrichtung verhindert. Diese Maßnahme kann aber zum Beispiel bei einer Getränkemaschine mit einem aufwärts in die Brühkammer gerichteten Wasserzulauf, wie sie die EP 1 440 910 A1 offenbart, ungenügend sein. Wenn sie nur leicht verzögert anspricht, können bei einem vorzeitigen Öffnen der Brühkammer Verletzungen des Bedieners nicht ausgeschlossen werden.

Es ist Aufgabe der Erfindung, die Funktionssicherheit einer Heißgetränkemaschine im Hinblick auf die dargelegten Probleme zu verbessern und insbesondere den Herstellungsaufwand zu reduzieren und zugleich Bauraum einzusparen.

Diese Aufgabe kann dadurch gelöst werden, dass das an sich selbsttätig und druckabhängig schaltende Ventil stromauf der Brühkammer zusätzlich druckunabhängig betätigbar ist. Es öffnet also nicht nur ab einem bestimmten anliegenden Über- oder Unterdruck automatisch, sondern kann zusätzlich quasi auf Anforderung in einem separaten Betätigungsvorgang geöffnet werden. Die Erfindung verfolgt also das Prinzip, ein druckabhängig arbeitendes Ventil zusätzlich auch druckunabhängig schaltbar auszurüsten. Dafür umfasst das Ventil erfindungsgemäß eine Betätigungseinrichtung, die beispielsweise aus Sicherheitsgründen eine weitere und druckunabhängige Schaltung des Ventils ermöglicht. Anstatt ein eigenes Ventil dafür vorzusehen, kann das bereits vorhandene Ventil diese Funktion zusätzlich übernehmen. Diese Funktionenkombination in einem Mehrfunktionenventil spart Material- und Montagekosten sowie Bauraum ein.

Prinzipiell kann das selbsttätig druckabhängig schaltende Ventil als Überdruck- oder als Unterdruckventil ausgebildet sein.

Erfindungsgemäß ist ein selbsttätig druckabhängig schaltendes Unterdruckventil stromauf der Brühkammer angeordnet, das bei Vorliegen eines Überdrucks auch in der Gegenrichtung zur Durchgangsrichtung des Ventils bei Unterdruck durchgängig ist. Es wirkt also zugleich, aber nicht gleichzeitig sowohl wie ein bekanntes Unterdruck- als auch wie ein Überdruckventil, und zwar zum Abbau eines überschüssigen und den Benutzer gegebenenfalls gefährdenden Überdrucks. Die Erfindung verfolgt also auch hier das Prinzip einer Funktionenkombination, indem ein Ventil sowohl als Unterdruck- als auch als Überdruckventil fungiert. Dieses Mehrfunktionenventil ist dazu als Zweirichtungsventil ausgebildet, das in der einen Durchgangsrichtung auf Unterdruck anspricht und in der Gegenrichtung zum Abbau von Überdruck dient. Durch die Doppelfunktion des Ventils kann wiederum der Herstellungsaufwand reduziert und zugleich Bauraum eingespart werden. Dieses Mehrfunktionenventils wird im Folgenden als "Zweirichtungsventil" bezeichnet.

Nach einer vorteilhaften Ausgestaltung der Erfindung kann das Zweirichtungsventil für einen Durchgang entgegen der Unterdruckrichtung betätigbar sein. Im Gegensatz zur Funktion als Unterdruckventil, in der es aufgrund des anliegenden Unterdrucks, also druckabhängig und selbsttätig schaltet und den gewünschten Druckausgleich erzielt, wird es im Falle des Überdruckabbaus in einem eigenen Betätigungsvorgang und druckunabhängig aktiviert. Es verfügt dazu über eine Betätigungseinrichtung für seine Bedienung im Überdruckfall.

Das Mehrfunktionenventile (Zweirichtungsventil) wird vorzugsweise dazu eingesetzt, den Überdruck aus dem System abzuleiten, wenn die Brühkammer während des Brühbetriebs versehentlich vorzeitig geöffnet wird. Aus Sicherheitsgründen soll der Überdruck dann nämlich nicht über den herkömmlichen Weg durch die Brühkammer und damit dem Benutzer zugewandt abgeleitet werden, sondern in einem dem Benutzer möglichst abgewandten Bereich der Getränkemaschine abgebaut werden. Dadurch kann Schaden in Folge einer Fehlbedienung vom Benutzer abgewendet werden.

Nach einer weiteren vorteilhaften Ausgestaltung der Erfindung kann das Zweirichtungsventil mit der Brühkammer mechanisch oder elektrisch gekoppelt sein, so dass es für einen Durchgang in der Überdruckrichtung geöffnet ist, sobald die Brühkammer geöffnet ist. Dadurch wird also ein Automatismus zwischen einem vorzeitigen oder generellen Öffnen der Brühkammer und einem Öffnen des Überdruckventils hergestellt. Die direkte Kopplung des Ventils mit der Brühkammer hat zur Folge, dass es zuverlässig öffnet, sobald die Brühkammer geöffnet wird. Sie bietet dadurch eine zusätzliche Sicherheit, weil das Öffnen des Überdruckventils an das Öffnen der Brühkammer und nicht zwingend an das Vorliegen eines Überdrucks gekoppelt ist. Denn ein Öffnen des Ventils ohne das Anliegen von Überdruck ist unschädlich, wohingegen ein Nichtöffnen des Ventils bei anliegendem Überdruck dem Benutzer beim Öffnen der Brühkammer schaden könnte.

Nach einer vorteilhaften Ausgestaltung der Erfindung kann das Mehrfunktionenventil mit der Brühkammer elektronisch gekoppelt sein. Dadurch kann die Konstruktion des Auslösemechanismus einfacher gestaltet und gegebenenfalls Platz eingespart werden. Außerdem kann das Auslösen des Ventils an weitere Bedingungen geknüpft werden, also nicht nur an das Öffnen der Brühkammer, sondern zum Beispiel an das Vorliegen eines bestimmten minimalen Überdrucks, ab dem eine Überdruckentlastung notwendig und sinnvoll erscheint. Der Überdruck kann sensorisch erfasst werden kann. Eine elektrische Kopplung zwischen dem erfinderischen Ventil und der Brühkammer kann zudem besonders dann vorteilhaft sein, wenn sie räumlich weit auseinander liegen. Die räumliche Distanz kann dann über elektrische Leiter überbrückt werden oder das Ventil und die Brühkammer können jeweils mit einer Steuerungseinrichtung verbunden sein. Eine größere räumliche Distanz zwischen der Brühkammer und dem Ventil kann vorliegen, wenn das Ventil in dem Leitungsabschnitt zwischen dem Wassertank und der Heizung angeordnet ist. Als herkömmliches Überdruckventil verhindert es dort einen Überdruckaufbau, falls sich in der Heizung ein Wasserstau infolge Verkalkung aufbauen sollte.

Eine Kopplung zwischen der Brühkammerbetätigung und dem Mehrfunktionenventil kann nach einer dazu alternativen Ausgestaltungsform der Erfindung mechanisch erfolgen. Dadurch kann eine hohe Zuverlässigkeit des Auslösevorgangs des Ventils im Überdruckfall erzielt werden. Eine mechanische Kopplung kann für das Zweirichtungsventil vorteilhaft sein, das in räumlicher Nähe zur Brühkammerbetätigung angebracht, also insbesondere in dem Leitungsabschnitt stromab der Heizeinrichtung und stromauf der Brühkammer angeordnet ist. Sowohl Überdruckventile als auch Unterdruckventile sollen möglichst schnell ansprechen. Je weiter entfernt sie von der Brühkammer platziert werden, umso eher besteht die Gefahr, dass sich Wasser in dem Leitungsabschnitt zwischen ihnen und der Brühkammer befindet. Das Wasser mit seiner relativ hohen Masse kann aber verzögernd auf die Aktivierung des Unterdruckventils und störend beim Überdruckabbau wirken. Sowohl Unterdruck- als auch Überdruckventile werden daher vorzugsweise möglichst in unmittelbarer Nähe zur Brühkammer platziert. Auch insofern ist eine Kombination beider Ventilteile zu einem gemeinsamen Funktionsbauteil als Zweirichtungsventil günstig.

Für Unter- oder Überdruckventile sind Mechanismen bekannt, bei denen zum Beispiel eine Kugel gegen Federkraft dichtend auf einen Ventilsitz gedrückt wird. Übersteigt die Unter- oder Überdruckkraft die Federkraft, so löst der anliegende Druck die Kugel vom Ventilsitz und öffnet das Ventil entgegen der Federkraft. Für eine Ausbildung als Mehrfunktionenventil kann an der Kugel eine Betätigungseinrichtung angeordnet sein, mit deren Hilfe die Kugel entgegen der Federkraft verschoben werden und damit das Ventil geöffnet werden kann.

Nach einer vorteilhaften Ausgestaltung der Erfindung umfasst das Ventil als abdichtendes Element eine flexible Scheibe, die auf einem Ventilsitz aufliegt und bei Unterdruck unter Verformung, aber ohne Verschiebung vom Ventilsitz abgehoben ist. Auch dadurch kann ein selbsttätiger Unterdruckausgleich erzielt werden, wobei in der flexiblen Scheibe das die Öffnungskraft des Ventils im Unterdruckfall definierende elastische Element einerseits und der Ventilkörper andererseits kombiniert sind. Dadurch lässt sich ein besonders kompakter Aufbau für das Zweirichtungsventil erzielen. Als Material für die Scheibe eignet sich Silikon besonders gut, weil sich daran keine Ablagerungen bilden. Das Ventil ist dadurch unanfällig gegen Verkalken.

Nach einer weiteren vorteilhaften Ausgestaltung der Erfindung kann bei einer Überdruckbetätigung des Ventils die flexible Scheibe verschoben und vom Ventilsitz abgehoben sein. Im Überdruckfall wird das Ventil entgegen der Überdruckrichtung geöffnet, die flexible Scheibe also entgegen der Druckrichtung vom Ventilsitz abgehoben. Da sich auch dabei die flexible Scheibe verformen kann, ist der Betätigungsweg ausreichend lang zu bemessen, um die Scheibe vollständig vom Ventilsitz abzuheben.

Die eingangs genannte Aufgabe wird außerdem durch ein Mehrfunktionenventil gelöst, das druckabhängig selbsttätig zugleich, aber nicht gleichzeitig als Unterdruckventil als auch wie ein Überdruckventil wirkt und zusätzlich vorzugsweise in Überdruckrichtung druckunabhängig betätigbar ist. Wesentlich ist jedenfalls, dass das an sich selbsttätig schaltende Ventil zusätzlich in Überdruckrichtung betätigbar ist und dafür eine Betätigungseinrichtung umfasst. Diese Funktionskombination erspart Herstellungs- und Montageaufwand.

Die eingangs genannte Aufgabe wird außerdem durch die Verwendung eines an sich bekannten, druckabhängig selbsttätig schaltenden Ventils, das zugleich, aber nicht gleichzeitig als Unterdruckventil als auch wie ein Überdruckventil wirkt, zwischen einem Wassertank und einer Brühkammer in einer Getränkemaschine gelöst, indem es zugleich als druckunabhängig betätigbares Überdruckventil dient. Die Erfindung verfolgt also das Prinzip einer Funktionskombination eines Ventils als automatisch schaltendes Ventil einerseits und zusätzlich betätigbares Dampfableitventil andererseits. Für eine Überdruckentlastung jedenfalls ist es in beiden Fällen unabhängig vom aktuell vorliegenden Druck in einem eigenen Betätigungsvorgang zu schalten.

Das Ventil wirkt damit also als Mehrfunktionenventil, muss dafür aber selbst nicht wesentlich umgestaltet sein. Es genügt beispielsweise die Anbringung einer

Betätigungseinrichtung am Ventilkörper, mit der das Ventil entgegen der Überdruckrichtung geöffnet werden kann.

Nach einer vorteilhaften Ausgestaltung der erfindungsgemäßen Verwendung wird das Mehrfunktionenventil dann zur Dampfableitung verwendet, sobald die Brühkammer geöffnet wird. Dadurch kann insbesondere bei einer Fehlbedienung der Getränkemaschine während eines Zubereitungsvorganges Schaden vom Benutzer abgewendet werden.

Das Prinzip der Erfindung wird im Folgenden anhand einer Zeichnung beispielshalber noch näher erläutert. In der Zeichnung zeigen:
- Figur 1: einen schematischen Aufbau einer Getränkezubereitungsmaschine,
- Figur 2: eine Detailansicht des Zweirichtungsventils samt Betätigungsvorrichtung,
- Figur 3: eine Schnittansicht des Ventils im Unterdruckfall, und
- Figur 4: eine Schnittansicht des Ventils im Überdruckfall.

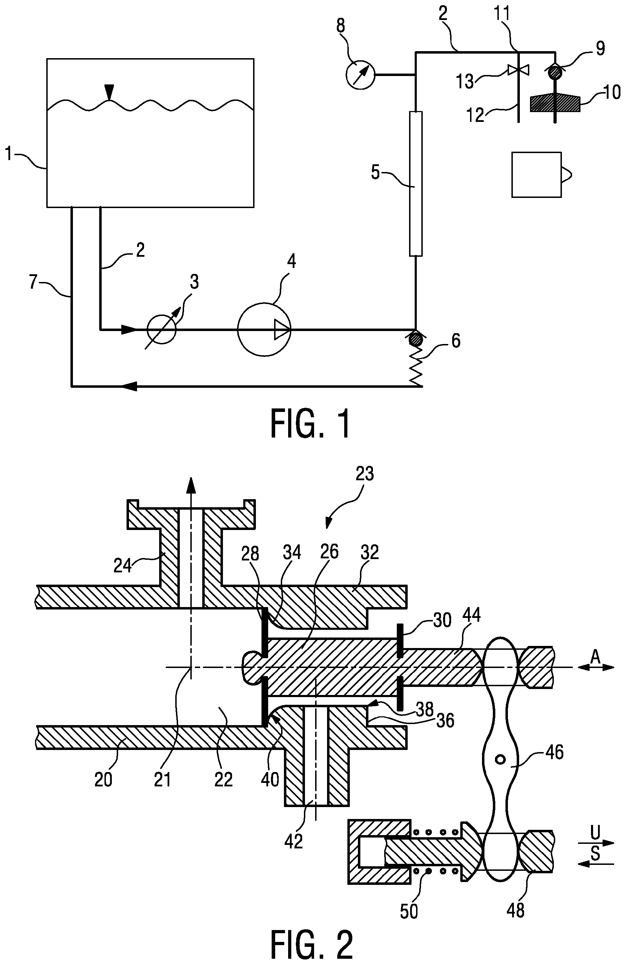

Prinzipiell umfasst eine Pad- oder Mehrgetränkemaschine gemäß Figur 1 einen Frischwassertank 1, der Frischwasser über einen Flüssigkeitszulauf 2 durch einen Durchflusszähler 3 und eine Pumpe 4 in eine Heizungseinrichtung 5 leitet. Die Pumpe 4 ist zugleich als Rücklaufsperre ausgebildet, damit das Wasser durch den Druck infolge seiner Erwärmung in der Heizeinrichtung 5 bei deaktivierter Pumpe 4 nicht in den Wassertank 1 zurück, sondern in Richtung einer Brühkammer 10 gefördert wird. Zwischen der Pumpe 4 und der Heizeinrichtung 5 ist ein druckabhängig öffnendes Überdruckventil 6 angeordnet, das einen ggf. entstehenden Überdruck zwischen dem Frischwassertank 1 und der Heizeinrichtung 5 über eine Rücklaufleitung 7 in den Frischwasserbehälter 1 ableitet. Erfindungsgemäß kann es zusätzlich druckunabhängig geschaltet werden. In dem dargestellten Aufbau dient es jedoch ausschließlich dem druckabhängigen Überdruckabbau infolge von beispielsweise verkalkungsbedingten Druckstörungen in der Heizeinrichtung 5.

Stromab der Heizeinrichtung 5 ist ein Temperatursensor 8 angeordnet. Ihm folgt stromab im Flüssigkeitszulauf 2 unmittelbar vor der Brühkammer 10 eine Rücklaufsperre 9.

Zwischen dem Temperatursensor 8 und der Rücklaufsperre 9 befindet sich ein Abzweig 11, der eine Ableitung 12 in die Atmosphäre an den Flüssigkeitszulauf 2 anschließt. In der Ableitung 12 ist ein Zweirichtungsventil 13 als Mehrfunktionenventil angeordnet.

Für eine Getränkezubereitung führt die Pumpe 4 Frischwasser aus dem Wassertank 1 in die Heizung 5. Dort wird es erhitzt und der Brühkammer 10 zugeführt. Für eine exakte Füllmenge bzw. Dosierung des Brühwassers sorgt der Durchflusszähler 3, die erforderliche Temperatur für eine erfolgreiche Zubereitung des Getränks überwacht der Temperatursensor 8. Am Ende eines Brühvorganges schaltet die Pumpe 4 den Wasservorschub aus, während die Heizung 5 noch weiterläuft. Das noch in der Heizung 5 befindliche Wasser wird aufgrund des fehlenden kühlen nachströmenden Wassers schnell in Dampf umgewandelt und bewirkt einen Dampfdruck, der die Flüssigkeitsreste stromab der Heizung 5 im Flüssigkeitszulauf 2 durch die Brühkammer 12 in eine bereitgestellte Tasse drückt. Der Dampfdruck spült außerdem Flüssigkeitsreste einer Getränkekapsel in der Brühkammer 10 aus bzw. trocknet ein in der Brühkammer 10 befindliches Getränkepad. Ein Nachtropfen bei der Entnahme eines gebrauchten Pads bzw. der Getränkekapsel kann dadurch weitgehend vermieden werden, was die Bedienung der Getränkemaschine vereinfacht.

Sobald nach Abschluss des Getränkezubereitungsvorgangs die Heizeinrichtung 5 abgeschaltet ist, kühlt der Dampf in der Zuleitung 2 stromab der Heizung 5 ab. Sein Volumen verringert sich, wodurch im Leitungsabschnitt 2 stromauf der Brühkammer 10 ein Unterdruck entsteht. Damit dieser Unterdruck keine Flüssigkeits- oder Substratreste aus der Brühkammer 10 in die Frischwasserzuleitung 2 ansaugt, verhindert das Rückschlagventil 9 einen Druckausgleich über die Brühkammer 10. Es kann z. B. als elastische geschlitzte Membran ausgebildet sein. Durch Alterung oder Fertigungstoleranzen kann jedoch ihre Funktion leiden, so dass sie nicht mehr vollständig luftdicht ist. Um einen Druckausgleich aus der Brühkammer 10 dennoch zu vermeiden, wird er gezielt über die Ableitung 12 hergestellt. Baut sich also ein Unterdruck im Flüssigkeitszulauf 2 auf, so wird er frühzeitig über das dann als Unterdruckventil fungierende Zweirichtungsventil 13 abgebaut.

Nicht nur durch den Druck der Pumpe 4 während der Getränkezubereitung, sondern vor allem durch das in der Heizung 5 erhitzte Wasser, insbesondere am Ende eines Zubereitungsvorgangs, entsteht im Flüssigkeitszulauf 2 ein erheblicher Druck bis hin zum Dampfstoß als Abschluss eines Zubereitungsvorgangs. Dieser Druck kann einem Benutzer bei einer Fehlbedienung der Getränkemaschine gefährlich werden. Öffnet er versehentlich und fälschlicherweise frühzeitig die Brühkammer 10, so kann er sich an dem sofort austretenden Dampf empfindlich verbrühen. Um dem entgegenzuwirken, dient das Zweirichtungsventil 13 nicht nur als Unterdruckventil, sondern auch als Dampfableitventil bei einer vorzeitigen Öffnung der Brühkammer 10. Es ist dazu mit der Brühkammer 10 mechanisch gekoppelt, so dass es öffnet, sobald die Brühkammer 10 geöffnet wird. Aufgrund des geringeren Widerstands im Leitungsweg der Ableitung 12 entweicht der Dampfdruck im Wesentlichen über das Zweirichtungsventil 13 und bestenfalls in nur noch vernachlässigbarem Umfang über die Brühklammer 10. Die Mündung der Ableitung 12 ist zur Sicherheit des Benutzers von ihm abgewandt an der Getränkemaschine angeordnet, so dass der abgeleitete Dampf den Benutzer nicht trifft.

Der Abzweig 11 für die Ableitung 12 ist in unmittelbarer Nähe der Brühkammer 10 angeordnet. Dies ermöglicht eine kompakte Ausbildung der Brühkammer 10 und des Zweirichtungsventils 13. Die Nähe zur Brühkammer 10 vereinfacht außerdem die mechanische Kopplung des Zweirichtungsventils 13 als Dampfableitventil mit einer Öffnungs- und Verschließbetätigung der Brühkammer 10.

Ein Konstruktionsbeispiel für einen Leitungsabschnitt mit einem Zweirichtungsventil 23 zeigt Figur 2: Ein Flüssigkeitszulauf 20 teilt sich in einem Abzweigebereich 21 in einen Zulauf 24 zu einer Brühkammer bzw. zu einer vorgeschalteten Rücklaufsperre und in einen in Achsrichtung des Zulaufs 20 anschließenden Ableitungsabschnitt 22. Er mündet an dem Zweirichtungsventil 23.

Das Zweirichtungsventil 23 umfasst einen Ventilkolben 26, der auf seiner dem Flüssigkeitszulauf 20 zugewandten Seite eine flexible Silikonscheibe 28 als Ventilkörper trägt. An seinem gegenüberliegenden, dem Flüssigkeitszulauf 20 abgewandten Ende trägt der Ventilkörper 26 eine Dichtscheibe 30, ebenfalls aus Silikon. Der Ventilkolben 26 wird von einem zylindrischen Ventilgehäuse 32 umgeben, das an seinen Stirnseiten jeweils einen Ventilsitz 34 für die Scheibe 28 und einen Ventilsitz 36 für die Scheibe 30 ausbildet. Die Ventilsitze 34, 36 bilden also einen ringförmigen Kragen, wobei der Ventilsitz 36 eine in der Schnittansicht rechtwinklige Sitzkante 38 aufweist, wohingegen der Ventilsitz 34 eine abgerundete Schulter 40 ausbildet.

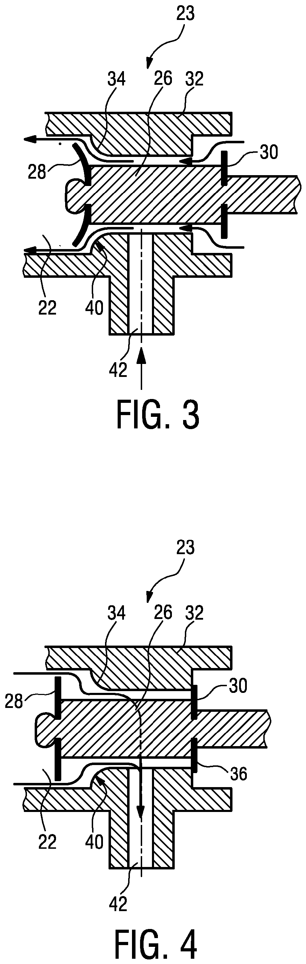

Der Ventilkolben 26 gleitet im Ventilgehäuse 32. Er hat einen (nicht dargestellten) stern- oder kreuzförmigen Querschnitt mit radialen Strahlen, deren Strahlenenden im Ventilgehäuse 32 geführt werden. Das Ventilgehäuse 32 ist dadurch im Bereich des Ventilkolbens 26 in seiner Achsrichtung bzw. in der Bewegungsrichtung A des Ventilkolbens 26 durchströmbar, der Ventilkolben 26 umspülbar. Die Bewegungen des Ventilkolbens 26 innerhalb des Ventilgehäuses 32 in seinen beiden Bewegungsrichtungen A sind entweder begrenzt durch das Anliegen der Scheibe 28 an ihrem Ventilsitz 34 (vgl. Figur 2) oder durch die Anlage der gegenüberliegenden Scheiben 30 auf ihrem Ventilsitz 36 (vgl. Figur 4). Etwa in der Mitte des zylindrischen Ventilgehäuses 32 zweigt radial ein Entlastungskanal 42 ab, der eine Verbindung vom Innenraum des Ventilgehäuses 32 zur Umgebung herstellt.

Auf der Seite der Scheibe 30 ist am Ventilkolben 26 ein Betätigungsstößel 44 angeschlossen, der sich in Bewegungsrichtung A erstreckt und über einen Drehhebel 46 mit einem federvorgespannten Betätigungshebel 48 kinematisch gekoppelt ist. Eine Druckfeder 50 spannt den Betätigungshebel 48 in eine Unterdruckrichtung U und entgegen einem Überdruck vor. Die Druckfeder 50 belastet das Zweirichtungsventil 23 also in Öffnungsrichtung bei Überdruck. Ihr wirkt eine Schließkraft S entgegen, die beim Schließen der Brühkammer 10 aktiviert wird. Die Schließkraft S resultiert aus der Verriegelung der Brühkammer im Betrieb. Das einander entgegengesetzt gerichtete, aber betragsmäßig gleich große Kräftepaar aus der Federkraft der Druckfeder 50 einerseits und der Schließkraft S andererseits gewährleistet, dass das Zweirichtungsventil 23 zuverlässig geöffnet wird, wenn der Verschluss der Brühkammer 10 aufgehoben wird, die Schließkraft S also wegfällt. Die Druckfeder 50 ist so stark zu dimensionieren, dass sie das Zweirichtungsventil 23 entgegen dem Überdruck öffnen kann. Gleich groß ist die Schließkraft S auszulegen, um das Zweirichtungsventil 23 bei verschlossener Brühkammer geschlossen zu halten.

Entsteht im Flüssigkeitszulauf 20 bei geschlossener Brühkammer ein ungewünschter Unterdruck, so gleicht ihn das Zweirichtungsventil 23 selbsttätig aus. Figur 3 zeigt das Einströmen von Luft durch den Ableitungskanal 32 am Ventilkolben 26 entlang durch das Ventilgehäuse 32 in den Flüssigkeitszulauf 20. Die Flexibilität der Scheibe 28 ist so bemessen, dass der Unterdruck ihren Rand vom Ventilsitz 34 abhebt. Die abgerundete Sitzschulter 40 erleichtert zusätzlich das Einströmen von Luft in den Flüssigkeitszulauf 20. Das Gleichgewicht der Federkraft der Druckfeder 50 und der Schließkraft S bewirkt, dass der Ventilkolben 26 insbesondere nicht in Überdruckrichtung verschoben wird und damit das Einströmen von Luft verhindert. Allein die Dimensionierung der Scheibe 28 sorgt also für einen selbsttätigen Unterdruckausgleich, ohne dass das Zweirichtungsventil 23 separat betätigt werden müsste.

Eine Betätigung ist dagegen erforderlich, wenn das Zweirichtungsventil 23 einen Überdruck in dem Flüssigkeitszulauf 20 abbauen soll. Beim Öffnen der Brühkammer 10 fällt die Schließkraft S weg, so dass die Druckfeder 50 den Betätigungshebel 48 in die Richtung U verschiebt. Der Drehhebel 46 verschiebt daraufhin den Ventilkolben 26 in die Gegenrichtung bis maximal zum Anschlag der Scheibe 30 auf ihrem Ventilsitz 36. Dabei wird die Scheibe 28 von ihrem Ventilsitz 34 und entgegen der Überdruckrichtung abgehoben.

Figur 4 zeigt das vollständig geöffnete Ventil 23 bei Überdruck. Vorher jedoch, beim Beginn der Verschiebungsbewegung des Ventilkolbens 26, verformt sich die Scheibe 28 ebenfalls, jetzt in der entgegengesetzten Richtung wie in Figur 3. Der Ventilkolben 26 muss also eine gewisse Wegstrecke zurücklegen, bevor das Ventil 23 öffnet. Sie muss bei der Dimensionierung der Druckfeder 50 und der Hebel 46, 48 berücksichtigt werden.

Der unter Überdruck stehende Dampf kann bei geöffnetem Ventil 23 die Scheibe 28 umfließen, in das Ventilgehäuse 32 und um den Ventilkolben 26 herum einströmen und über den Ableitungskanal 42 in die Umgebung abgegeben werden. Der Ableitungskanal kann zum Beispiel senkrecht abwärts in ein bereitgestelltes Getränkegefäß gerichtet sein oder in ein Überlaufbecken unterhalb einer Abstellebene eines Getränkegefäßes geleitet werden. Die Feder 50 drückt die ringförmige Scheibe 30 dichtend auf ihren Ventilsitz 36, so dass der Dampf nicht in einer Richtung parallel zur Bewegungsrichtung A des Ventilkolbens 26 und damit möglicherweise auf einen Benutzer hin entweichen kann.

Da es sich bei dem vorhergehenden, detailliert beschriebenen Zweirichtungsventil um ein Ausführungsbeispiel handelt, kann es in üblicher Weise vom Fachmann in einem weiten Umfang modifiziert werden, ohne den Bereich der Erfindung zu verlassen. Insbesondere kann die konkrete Ausgestaltung des Ventilmechanismus in anderer Form als in der hier beschriebenen erfolgen. Ebenso kann die mechanische Kopplung in einer anderen Form ausgestaltet werden, wenn dies aus Platzgründen bzw. designerischen Gründen notwendig ist. Weiterhin schließt die Verwendung der unbestimmten Artikel "ein" bzw. "eine" nicht aus, dass die betreffenden Merkmale auch mehrfach vorhanden sein können.

### Bezugszeichenliste

- 1: Frischwassertank
- 2: Flüssigkeitszulauf
- 3: Durchflusszähler
- 4: Pumpe
- 5: Heizung
- 6: Überdruckventil
- 7: Rücklaufleitung
- 8: Temperatursensor
- 9: Rückschlagventil
- 10: Brühkammer
- 11: Abzweigung
- 12: Ableitungskanal
- 13: Zweirichtungsventil

- 20: Flüssigkeitszulauf
- 21: Abzweigung
- 22: Ableitungsabschnitt
- 23: Zweirichtungsventil
- 24: Zulauf zur Brühkammer
- 26: Ventilkolben
- 28: flexible Silikonscheibe
- 30: Ringscheibe
- 32: Ventilgehäuse
- 34: Ventilsitz
- 36: Ventilsitz
- 38: Sitzkante
- 40: Sitzschulter
- 42: Ableitungskanal
- 44: Betätigungsstößel
- 46: Drehhebel
- 48: Betätigungshebel
- 50: Druckfeder
- A: Betätigungsrichtungen des Ventilkolbens 26
- U: Betätigungsrichtung bei Überdruck
- S: Schließkraft

## Patentansprüche

1. Getränkemaschine mit einem Wassertank (1), einer Heizeinrichtung (5) und einer Brühkammer (10), die durch jeweils dazwischen angeordnete Leitungsabschnitte (2) miteinander verbunden sind, und mit einem druckabhängig selbsttätig schaltenden Ventil (13; 23) in dem Leitungsabschnitt (2) zwischen Wassertank (1) und Brühkammer (10), **dadurch gekennzeichnet, dass** das Ventil ein druckabhängig selbsttätig schaltendes Unterdruckventil (13; 23) in einem der Leitungsabschnitte (2) vor der Brühkammer (10) ist, und dass das Unterdruckventil (13; 23) bei Überdruck in Gegenrichtung zur Durchgangsrichtung bei Unterdruck, also in Überdruckrichtung durchgängig ist.

2. Getränkemaschine nach Anspruch 1, **dadurch gekennzeichnet, dass** das Ventil (13) für einen Durchgang entgegen der Unterdruckrichtung betätigbar ist.

3. Getränkemaschine nach einem der obigen Ansprüche, **dadurch gekennzeichnet, dass** das Ventil (6; 13; 23) mit der Brühkammer (10) gekoppelt ist, so dass es für einen Durchgang in der Überdruckrichtung geöffnet ist, sobald die Brühkammer (10) geöffnet ist.

4. Getränkemaschine nach Anspruch 3, **dadurch gekennzeichnet, dass** das Ventil (6; 13) mit der Brühkammer elektrisch gekoppelt ist.

5. Getränkemaschine nach Anspruch 3, **dadurch gekennzeichnet, dass** das Ventil (6; 13; 23) mit der Brühkammer (10) mechanisch gekoppelt ist.

6. Getränkemaschine einem der Ansprüche 1 bis 5, **dadurch gekennzeichnet, dass** das Ventil (23) als abdichtendes Element eine flexible Scheibe (28) umfasst, die auf einem Ventilsitz (34) liegt und die unter Verformung vom Ventilsitz (34) abhebbar ist.

7. Getränkemaschine nach Anspruch 6, **dadurch gekennzeichnet, dass** die flexible Scheibe (28) bei einer Überdruck-Betätigung des Ventils (23) durch eine Verschiebung vom Ventilsitz (34) abhebbar ist.

8. Mehrfunktionenventil (13; 23), das druckabhängig selbsttätig zur Unterdruckentlastung schaltet und zusätzlich in Überdruckrichtung druckunabhängig betätigbar ist, zum Einsatz in einer Getränkemaschine.

9. Verwendung eines Mehrfuntionenventils nach Anspruch 8 in einem Leitungsweg (2) einer Getränkemaschine zwischen einem Wasservorratstank (1) und einer Brühkammer (10) als Dampfableitventil für einen Überdruckabbau, sobald die Brühkammer (10) geöffnet wird.

## Claims

1. Beverage machine with a water tank (1), a heating facility (5) and a brewing chamber (10), which are connected to one another by line segments (2) arranged respectively in between, and with a valve (13; 23) that switches automatically as a function of pressure in the line segment (2) between the water tank (1) and the brewing chamber (10), **characterised in that** the valve is a vacuum valve (13; 23) that switches automatically as a function of pressure in one of the line segments (2) before the brewing chamber (10) and that in the event of overpressure there can be a throughflow through the vacuum valve (13; 23) in the counter direction to the throughflow direction in the event of a vacuum, in other words in the overpressure direction.

2. Beverage machine according to claim 1, **characterised in that** the valve (13) can be actuated for a throughflow counter to the vacuum direction.

3. Beverage machine according to one of the preceding claims, **characterised in that** the valve (6; 13; 23) is coupled to the brewing chamber (10), so that it is opened for a throughflow in the overpressure direction, as soon as the brewing chamber (10) is opened.

4. Beverage machine according to claim 3, **characterised in that** the valve (6; 13) is coupled electrically to the brewing chamber.

5. Beverage machine according to claim 3, **characterised in that** the valve (6; 13; 23) is coupled mechanically to the brewing chamber (10).

6. Beverage machine according to one of claims 1 to 5, **characterised in that** the valve (23) comprises a sealing element in the form of a flexible disk (28), which rests on a valve seat (34) and can be raised from the valve seat (34) by deformation.

7. Beverage machine according to claim 6, **characterised in that** the flexible disk (28) can be raised by displacement from the valve seat (34) during overpressure actuation of the valve (23).

8. Multi-function valve (13; 23), which switches automatically as a function of pressure for vacuum release purposes and can additionally be actuated in the overpressure direction irrespective of pressure, for use in a beverage machine.

9. Use of a multi-function valve according to claim 8 in a line path (2) of a beverage machine between a water storage tank (1) and a brewing chamber (10) as a steam discharge valve to eliminate overpressure, as soon as the brewing chamber (10) is opened.

## Revendications

1. Distributeur de boissons comprenant un réservoir à eau (1), un dispositif de chauffage (5) et une chambre de percolation (10), lesquels sont reliés entre eux par des sections de conduite (2) respectivement disposées entre eux, et comprenant une soupape (13 ; 23) commutant automatiquement en fonction de la pression, placée dans la section de conduite (2) entre le réservoir à eau (1) et la chambre de percolation (10), **caractérisé en ce que** la soupape est une soupape de dépression (13 ; 23) commutant automatiquement en fonction de la pression, placée dans une des sections de conduite (2) en amont de la chambre de percolation (10), et **en ce que** la soupape de dépression (13 ; 23), en cas de surpression, peut être traversée en sens inverse de la direction de passage, donc dans le sens de la surpression.

2. Distributeur de boissons selon la revendication 1, **caractérisé en ce que** la soupape (13) peut être commandée pour un passage en sens inverse du sens de la dépression.

3. Distributeur de boissons selon l'une quelconque des revendications ci-dessus, **caractérisé en ce que** la soupape (6 ; 13 ; 23) est couplée à la chambre de percolation (10) de sorte qu'elle est ouverte pour un passage dans le sens de la surpression dès que la chambre de percolation (10) est ouverte.

4. Distributeur de boissons selon la revendication 3 **caractérisé en ce que** la soupape (6 ; 13) est électriquement couplée à la chambre de percolation.

5. Distributeur de boissons selon la revendication 3 **caractérisé en ce que** la soupape (6 ; 13, 23) est mécaniquement couplée à la chambre de percolation (10).

6. Distributeur de boissons selon l'une quelconque des revendications 1 à 5, **caractérisé en ce que** la soupape (23) comprend un disque flexible (28) en tant qu'élément étanchéifiant, lequel disque repose sur un siège de soupape (34) et peut être soulevé du siège de soupape (34) par déformation.

7. Distributeur de boissons selon la revendication 6 **caractérisé en ce que** le disque flexible (28), lors d'une commande de surpression de la soupape (23), peut être soulevé du siège de soupape (34) en raison d'un déplacement.

8. Soupape multifonctionnelle (13 ; 23) qui commute automatiquement en fonction de la pression pour la décharge de dépression et qui est en plus commandable en fonction de la pression dans le sens de la surpression, destinée à être utilisée dans un distributeur de boissons.

9. Utilisation d'une soupape multifonctionnelle selon la revendication 8 dans un cheminement de conduite (2) d'un distributeur de boissons entre un réservoir à eau (1) et une chambre de percolation (10) en tant que soupape de dérivation de vapeur pour une suppression de surpression dès que la chambre de percolation (10) est ouverte.
